# EUROPEAN PATENT SPECIFICATION

(11) **EP 3 281 782 B1**
(45) Date of publication and mention of the grant of the patent: **27.02.2019**
(21) Application number: 16183454.4
(22) Date of filing: 09.08.2016
(51) Int. Cl.: B32B 5/18, B32B 5/02, B32B 15/04, B32B 15/085, B32B 15/20, B32B 27/10, B32B 27/20, B32B 27/32, B32B 29/00, E04C 2/26

(54) **FIRE RESISTANT FOAM FACER**
FEUERBESTÄNDIGE SCHAUMSTIRNSEITE
PAREMENT DE MOUSSE RÉSISTANT AU FEU

(43) Date of publication of application: 14.02.2018
(73) Proprietor: Mondi AG, 1030 Wien (AT)
(72) Inventor: Schreibmeier, Michaela, 8720 Knittelfeld (AT); Kacur, Jan, 41201 Litomerice (CZ); Rosenwirth, Johannes, 9500 Villach (AT); Betz, Jürgen, 41569 Rommerskirchen (DE)
(74) Representative: Hoffmann Eitle

(56) References cited:
- US-A- 6 093 481
- US-A1- 2009 098 357

## Description

### Technical field

The present invention relates to a foam facer having a certain fire resistance, a foam panel or foam board comprising the foam facer and the use thereof.

### Technological background

Rigid foam panels (or foam boards) are widely used in building industries due to their good insulation properties. For the production of such foam panels, foam facers are used at one or both sides of the panel. The foam facers are sometimes also denoted as "process liners" in this context. They improve the stiffness and, thus, the processability of the foam panel and enhance its gas tightness. Prominent types of foam facers are paper-based foam facers, which basically are laminates of paper, aluminum and polyethylene. These paper-based foam facers typically comprise either one or two aluminum sheets. US2009098357 discloses a 3-ply facer comprising kraft paper, polyethylene and aluminum foil.

For building applications, a certain flame retardancy or fire resistance of the foam panels is desired for safety reasons. Changes in legislation may even request that foam panels used for building insulations exhibit a fire resistance according to Euroclass E (EN ISO 11925-2). However, foam panels using the above-mentioned paper-based foam facers often have insufficient fire resistance and fail to fulfill the requirements of Euroclass E. Paper and polyethylene have low flame-retardancy and are combustible. Moreover, at high temperatures, such as during exposure to a flame, a so-called stack-effect (sometimes also referred to as "chimney effect") can occur, where paper delaminates and immediately starts burning fiercely, i.e. with high flames.

### Summary of the invention

Therefore, it is an object of the present invention to provide a foam facer overcoming or reducing the deficiencies of conventional paper-based foam facers. In particular, it is an object of the present invention to provide a foam facer, which allows for producing foam panels or foam boards with improved fire resistance, such as with fire resistance fulfilling the requirements of Euroclass E according to EN ISO 11925-2. Further objects are the provision of a foam panel or foam board comprising the foam facer and the use of such a foam panel or foam board.

The above object is solved according to the present invention by the foam facer, the foam panel or foam board and the use as defined in the independent claims.

### Brief description of the drawings

Fig. 1a shows a schematic cross-sectional view of a foam facer according to an embodiment of the present invention having a first aluminum layer.
Fig. 1b shows a schematic cross-sectional view of a foam facer according to another embodiment of the present invention having a first and a second aluminum layer.
Fig. 2a and 2b each show a schematic cross-sectional view of a foam panel or foam board according to the present invention containing one foam facer or two foam facers, respectively.
Fig. 3 shows a schematic cross-sectional view of a foam facer as prepared by Example 1.
Fig. 4 shows a schematic cross-sectional view of a foam facer as prepared by Example 2.

### Detailed description of the invention

### Foam facer

As mentioned above, a first aspect of the present invention relates to a foam facer. In more detail, the foam facer (1) is a laminate comprising
- a first aluminum layer (10) of aluminum or an aluminum alloy;
- a first polyethylene-containing polymer layer (20);
- a sheet of paper (30);
- a second polyethylene-containing polymer layer (40); and
- optionally, a second aluminum layer (50) of aluminum or an aluminum alloy;
the sheet of paper (30) being placed between the first and the second polyethylene-containing polymer layer (20, 40), the first polyethylene-containing polymer layer (20) being placed between the first aluminum layer (10) and the sheet of paper (30) and the second polyethylene-containing polymer layer (40) being placed between the second aluminum layer (50), if present, and the sheet of paper (30),
wherein
the first and/or the second polyethylene-containing polymer layer (20, 40) contain(s) independently from another 10 to 60 wt.% of a mineral filler, based on the total weight of the respective layer,
the mineral filler is selected from the group consisting of calcium carbonate, calcium magnesium carbonate, talc, clay, a magnesium hydroxide compound, an aluminum hydroxide compound and combinations thereof, and
the mineral filler has a mean particle diameter D50 of 0,5 µm or more and 10 µm or less.

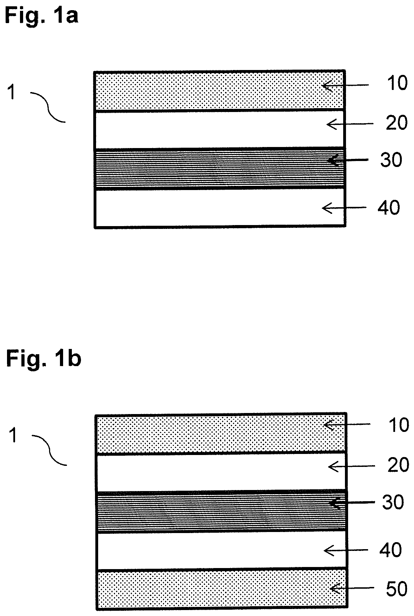

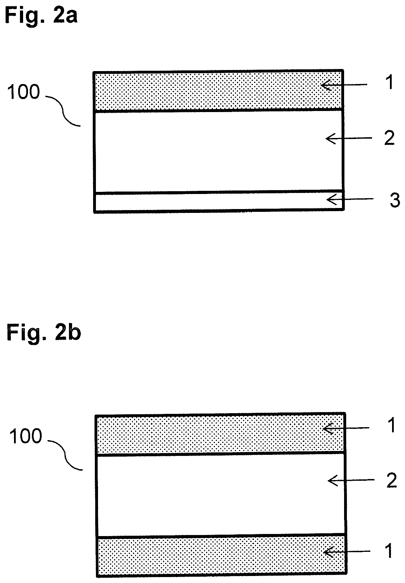

A foam facer (1) according to an embodiment of the present invention having only a first aluminum layer (10) is illustrated in Fig. 1a. A foam facer (1) according to another embodiment of the present invention having the first and the optional second aluminum layer (50) is illustrated in Fig. 1b. Both embodiments are suitable for making foam panels or foam boards (100), in particular of rigid polymer foams (2), foam facers having the first and the second aluminum layer (10, 50) being preferred. Fig. 2a and Fig. 2b show cross-sectional views of foam panels or foam boards (100) comprising one (Fig. 2a) or two (Fig. 2b) foam facers (1) according to the present invention. In case of only one foam facer (1) according to the invention, a metal layer (3) can be present on the side opposite to the foam facer (1). Preferably, the first aluminum layer (10) forms an outermost layer of the foam facer (1). In the foam panel or foam board (100), the first aluminum layer (10) preferably faces away from the polymer foam (2) and forms an outermost layer (not shown in Fig. 2a and Fig. 2b).

The inventors have surprisingly found that the fire performance of the foam panel or foam board (100) containing the foam facer (1) is significantly improved by adding the mineral filler to the first and/or the second polyethylene-containing polymer layer (20, 40). Preferably, both the first and the second polyethylene-containing polymer layer (20, 40) contain the mineral filler.

One reason for the enhanced fire resistance of a foam panel or foam board (100) comprising the foam facer (1) might be that the mineral filler reduces the calorimetric value of the foam facer (1) or the polyethylene-containing polymer layer (20, 40), respectively, because the mineral filler is a noncombustible material. The mineral filler thus confers a certain fire resistance to the polyethylene-containing polymer layer (20, 40) and the foam facer (1) of the present invention, respectively.

In addition, the inventors surprisingly found that the added mineral filler accounts for enhanced adhesion, in particular under high temperatures, of the polyethylene-containing polymer layer (20, 40) to the sheet of paper (30) as well as to the aluminum layer (10, 50). As a result of the improved adhesion, delamination under the influence of heat is significantly reduced in comparison to conventional paper-based foam facers not containing the mineral filler as used in the present invention. Hence, the occurrence of a stack-effect is reduced or not observed at all if a foam panel or foam board (100) comprising the foam facer (1) of the present invention is subjected to fire testing. As a result, less instances of spontaneous development of high flames caused by exposed paper or exposed polyethylene are observed with the foam facer (1) of the present invention than with conventional paper-based foam facers not having the mineral filler in the polyethylene layers.

The mineral filler exhibits higher heat conductivity than polyethylene. Without being bound to theory, the inventors assume that this contributes to the improved adhesion under high temperature conditions such as a flame, because the heat is lead away from the area, where the flame attacks the foam facer, so that the risk of delamination is reduced. In conclusion, enhanced adhesion of the first and/or the second polyethylene-containing polymer layer (20, 40) contributes to fire resistance, smaller flames and retardation of flame propagation.

With the foam facer (1) of the present invention, foam panels or foam boards (100) exhibiting improved fire resistance can be produced, in particular without any changes on the producer's machine set-up. The foam panels or foam boards (100) can even fulfill the requirements of Euroclass E according to EN ISO 11925-2.

As mentioned above, the mineral filler in the polyethylene-containing polymer layer (20, 40) confers good fire resistance to the foam facer (1) according to the present invention. The mineral fillers used according to the present invention are cost-effective and uncritical in terms of health, safety and environmental aspects. Thus, the foam facer (1) can be produced economically and can be safely used for various applications.

The inventors have surprisingly found that the foam facer (1) according to the present invention does not require halogen-based, boron-based or heavy metal-based flame retardants for achieving good fire resistance properties. Moreover, in contrast to halogen-based, boron-based or heavy metal-based flame retardants, the mineral filler as used according to the present invention does not develop toxic substances or cause corrosion. The mineral filler is preferably food safe, so that the foam facer (1) or the foam panel or foam board (100) of the present invention can even be used at food production sites.

It is further worthwhile to note that the mineral filler does not impart the use of the foam facer (1) for making foam panels and boards (100). The foam facer (1) has good gas tightness und confers stiffness to the foam board or panel (100) .

In the foam facer (1), the first aluminum layer (10) is required for low emissivity of the gas contained in the polymer foam (1), which accounts for good insulation properties of the foam panel or foam board (100). If the first aluminum layer (10) is the outermost layer of the foam facer (1) or the foam panel or foam board (100), a reflective insulation product is obtained that can fulfill the heat protective characteristics according to DIN EN ISO 10456:2010. Moreover, one of more of DIN EN 16012:2012 +A1:2015, ASTM C1371-04a and BS EN 15976:2011 can be fulfilled.

If present, the second aluminium layer (50) further enhances gastightness. Long-term insulation characteristics as regulated in ASTM D3985 can be fulfilled. Therefore, it is preferred that the foam facer (1) contains a first and a second aluminium layer (10, 50).

The term "foam facer" is known to the skilled person in foam panel and foam board production. The foam facer according (1) to the present invention constitutes a laminate as defined herein, which is suitable for shielding polymer foams in foam panels or foam boards. During continuous production of foam panels or foam boards, in particular rigid foam panels, the laminate or foam facer is conveyed, for example by means of rollers. The polymer material for the foam panel or foam board (100) is then applied thereon for further processing. In this case, the foam facer also serves as a "process liner". Alternatively, in discontinuous production of the foam panel or foam board, the polymer material is applied on a foam facer of a defined size. The polymer material can be foamed on the foam facer or be applied in a (partially) foamed form.

During continuous production of foam panels or foam boards, a foam facer has a relatively long length, so that it can be conveyed continuously. After application of the polymer material and foaming, it is usually cut to form foam panels or foam boards of a defined size. In view of this continuous process, the foam facer works as a "process liner".

### Mineral filler

As mentioned above, the mineral filler is required for achieving good fire resistance. The mineral filler has a mean particle diameter D50 of 0.5 µm or more and 10 µm or less. Preferably the mean particle diameter D50 is 0.6 µm or more and 8 µm or less and more preferably 0.7 µm or more and 6 µm or less. The particle diameter is determined by laser diffraction analysis and is based on the volume. Commercially available laser diffraction analysis instruments can be used for measuring, such as a Mastersizer® analyzer from Malvern. Preferably, the mineral filler has a spherical shape.

The mineral filler may have a particle diameter D98 of 15 µm or less, preferably 12 µm or less. It is measured by laser diffraction analysis and is based on the volume. The mineral filler particles can be obtained by removing larger particles by a sifter method (so-called top cut).

The first and/or the second polyethylene-containing polymer layer (20, 40) contain(s) independently from another 10 to 60 wt.%, preferably 15 to 50 wt.%, more preferably 20 to 40 wt.%, of the mineral filler, based on the total weight of the respective layer. Herein, "wt.%" stands for "% by weight".

Due to the specific particle size of the mineral filler and the amount contained in the polyethylene-containing polymer layer (20, 40), the mineral filler can be homogenously blended with the polymers of the polyethylene-containing polymer layer (20, 40). If the particle size and amount of filler are in the above ranges, good adhesion of the polyethylene-containing polymer layer (20, 40) to the sheet of paper (30) and the aluminum layer (10, 50), respectively, is achieved. Preferably the mineral filler is contained in both the first and the second polyethylene-containing polymer layer (20, 40) for further improved fire resistance of the foam facer or the foam panel or foam board (100) according to the present invention.

The mineral filler is selected from the group consisting of calcium carbonate, calcium magnesium carbonate, talc, clay, a magnesium hydroxide compound, an aluminum hydroxide compound and combinations thereof. The mineral filler may be any derivative known of these compounds in terms of crystal structure or crystal water. The terms "magnesium hydroxide compound" and "aluminum hydroxide compound" relate to compounds containing the respective metal and at least one hydroxide anion, such as for example Mg₃Si₄O₁₀(OH)₂), Mg(OH)₂, Mg₅(CO₃)₄(OH)₂, AlO(OH), Al(OH)₃. Specific examples of the mineral filler include CaCO₃, CaMg(CO₃)₂, talc (in particular Mg₃Si₄O₁₀(OH)₂), clay, Mg(OH)₂, Mg₅(CO₃)₄(OH)₂, AlO(OH), Al(OH)₃ and any hydrates or combinations thereof. The mineral fillers are thus non-toxic and even food-safe. They allow for high fire resistance and good mechanical properties of the foam facer (1).

The mineral filler is preferably selected from the group consisting of calcium carbonate, calcium magnesium carbonate (CaMg(CO₃)₂), talc and combinations thereof. In particular, the mineral filler may be calcium carbonate and/or talc, which is more preferable in terms of adhesion of the polyethylene-containing polymer layer (20, 40) to the sheet of paper (30) or the aluminum layer (10, 50), respectively. Calcium carbonate is most preferred.

For example, calcium carbonate particles having a mean particle size D50 in the range of 0.7 µm or more to 3 µm or less, preferably 1.0 µm or more to 2.5 µm or less, such as 1.6 µm, can be used. The D98 value (top cut) is preferably 15 µm or less, more preferable 12 µm or less.

Preferred talc particles have a mean particle size D50 in the range of 2 µm or more to 6 µm or less, preferably 3 µm or more to 5 µm or less, such as 4 µm.

Conventional methods, i.e. methods known as such to the skilled person, may be used for blending the mineral filler with the polymers in order to form a compound for the polyethylene-containing polymer layer (20, 40). A homogenous distribution of the mineral filler in the polyethylene-containing polymers is preferred. For instance, the mineral filler can be directly blended with the polymers in an extruder. Another option is first preparing a masterbatch compound of the mineral filler, for example in polyethylene, having a content of the mineral filler in the range of 40 to 90 wt.%, based on the total weight of the masterbatch. The masterbatch compound can then be blended with further polymers using standard procedures.

A further option is pre-coating the mineral filler with an organic material, so that the pre-coated mineral filler has a hydrophobic surface, and then blending the pre-coated mineral filler with the polymers of the first and/or the second polyethylene-containing polymer layer (20, 40). Of course, it is also possible to prepare a masterbatch of pre-coated mineral fillers. Pre-coating the mineral filler can improve homogenous distribution of the mineral filler in the final blend, avoid agglomeration of the particles and reduce moisture uptake. An efficient method for pre-coating mineral fillers is the Irtion® technology of the GCR Group. The principle of this IR ray-based method is outlined in EP 1 793 187 B1. Pre-coated mineral fillers or masterbatches thereof can also be obtained from the GCR Group.

### Polyethylene-containing polymer layer

The polymers of the polyethylene-containing polymer layer (20, 40) are mainly one or more types of polyethylene.

Preferably, in the first and/or the second polyethylene-containing polymer layer (20, 40), 80 wt.% or more, more preferably 90 wt.% or more, even more preferably 98 wt.% or more, of the polymers may be one or more types of polyethylene. The polyethylene-containing polymer layer (20, 40) may also be a polyethylene layer, wherein all polymers are polyethylene.

In case the polyethylene-containing polymer layer (20, 40) contains a blend of polyethylene with other polymers, blends with polypropylene are preferred. For example, the first and/or the second polyethylene-containing polymer layer (20, 40) can contain independently from another 80 wt.% or more to 100 wt.% or less of polyethylene and 20 wt.% or less to 0 wt.% or more of polypropylene, based on the total weight of the polymers in the respective layer. Preferably, the first and/or the second polyethylene-containing polymer layer (20, 40) contain(s) independently from another 90 wt.% or more to 100 wt.% or less of polyethylene and 10 wt.% or less to 0 wt.% or more of polypropylene. A small amount of polypropylene can improve the temperature resistance of the polyethylene-containing polymer layer (20, 40) vis-a-vis layers, where the polymers are polyethylene only.

Herein, the term polyethylene relates to all kinds of polyethylene known to the skilled person such as LLDPE, LDPE, MDPE and HDPE. LDPE or mixtures of LDPE and LLDPE containing up to 80% LLDPE, based on the total polyethylene content, are preferably used as polyethylene. The LDPE may, for example, have a MFI of 4 to 15 g/10 min as measured according to ISO 1133 (190°C, 2.16 kg load).

The polyethylene-containing polymer layer (20, 40) may further contain additives typically used in polymer industries such as plasticizers, process aids or stabilizers.

It is noted that the foam facer (1) of the present invention does not require halogen-based, boron-based or heavy metal-based flame retardants. As such flame retardants are toxic or develop toxic gases in case of fire, their use is not desired in the foam facer (1) of the present invention. Hence, such flame retardants are preferably not added to the polyethylene-containing polymer layer (20, 40).

Accordingly, it is preferred that the first and the second polyethylene-containing polymer layer (20, 40) contain in total less than 2.0 wt.%, preferably less than 1.0 wt.%, more preferably less than 0.2 wt.%, of halides, boron and heavy metals except Zn, based on the total weight of the respective layer. The first and the second polyethylene-containing polymer layer (20, 40) can be free of halides, boron or heavy metals, which means that these elements are only present as unavoidable impurities (i.e. less than 0.05 wt.%) if at all. Herein, metals and semi-metals having an atomic number of 23 (vanadium) or more are considered to be heavy metals with the exclusion of Zn. Zn is excluded from the heavy metals, because it is not critical in terms of health, safety or environmental issues salts. Zn may, for instance, be present in the form of Zn-neutralized polymers, such as in tie layers.

The first and/or the second polyethylene-containing polymer layer (20, 40) can be comprised of a single layer. It is also possible that the first and/or the second polyethylene-containing polymer layer (20, 40) are independently from another made of two, three or more polyethylene-containing sublayers (21, 22, 41, 42), such as two, three or four sublayers, preferably two or three sublayers. If the first and/or the second polyethylene-containing polymer layer (20, 40) is/are comprised of sublayers, one, two or more, such as one or two, of the sublayers may be free of the mineral filler provided that at least one sublayer contains the mineral filler. It is possible that all sublayers (21, 22, 41, 42) contain the mineral filler.

In the foam facer (1) according to the present invention, the first and/or the second polyethylene-containing polymer layer (20, 40) preferably has/have independently from another a basis weight in the range of 5 to 30 g/m², preferably 6 to 25 g/m² and more preferably 7 to 20 g/m². If the first and/or the second polyethylene-containing polymer layer (20, 40) is/are placed between tie layers (25, 26, 45, 46) for bonding to the sheet of paper (30) and the aluminum layer (10, 50), respectively, as described in more detail below, the first and/or the second polyethylene-containing polymer layer (20, 40) may preferably have a basis weight of 5 to 20 g/m², preferably 6 to 15 g/m². The basis weight can be measured by separating the layers and then determining the area weight according to ISO 536:2012. The basis weight can be controlled by the output of the extruder and the speed and width of the line.

In general, thin and flat foam facers (1) are desired for making the foam panel or foam boards (100). In consequence, it is preferred that the first and the second polyethylene-containing polymer layer (20, 40) are neither porous nor foamed. In particular, the first and/or the second polyethylene-containing polymer layer (20, 40) may have a thickness in the range of 4 to 25 µm preferably 6 to 16 µm. The thickness can be determined by measuring the area weight (ISO 534:2012) followed by calculation from the density and ratio of the components.

As mentioned above, for the foam facer (1) according to the present invention, it is preferred that the first and the second polyethylene-containing polymer layer (20, 40) contain the mineral filler and thus show good adhesion to the sheet of paper (30) and the aluminum layer (10, 50), respectively. The first and/or the second polyethylene-containing polymer layer (20, 40) can be in direct contact with the sheet of paper (30) and the first or second aluminum layer (10, 50), respectively, or tie layers (25, 26, 45, 46) can be used for bonding. Tie layers are rather thin polymer layers used for bonding two layers with each other. For use in the foam facer (1) of the present invention, the tie layers (25, 26, 45, 46) typically have a basis weight of 0.5 to 5 g/m², preferably 1 to 4 g/m². The thickness of the tie layers is preferably in the range of 1 to 4 µm. The thickness can be measured by a microtome cut and microscopy using transmitted light. Preferably, the polymer of the tie layers is selected from the group consisting of poly(ethylene-co-methacrylic acid) (EMAA or EMA), poly(maleic anhydride) (MAH), ionomers and combinations thereof. Primer-based tie layers may also be used. Thickness and basis weight of the tie layers can be controlled by the output of the extruder and the speed and the width of the line.

Hence, the first and the second polyethylene-containing polymer layer (20, 40) can independently from another either be directly bonded to the sheet of paper (30) or by means of a tie layer (25, 45). Likewise, the first and the second polyethylene-containing polymer layer (20, 40) can independently from another either be directly bonded to the first aluminum layer (10) and the second aluminum layer (50), respectively, or by means of a tie layer (26, 46). In these embodiments, the tie layers are preferably tie layers as described in the previous paragraph.

### Sheet of paper

There are no particular limitations with regard to the sheet of paper (30). Hence, paper qualities, which are commonly used for paper-based foam facers, may also be used in the foam facer (1) according the present invention. For example, the sheet of paper (30) may be a tough paper, such as a kraft paper. The sheet of paper (30) has preferably a basis weight of 25 to 180 g/m², more preferably 30 to 150 g/m², even more preferably 50 to 120 g/m² and most preferably 70 to 90 g/m². Preferably, the sheet of paper (30) is a kraft paper having a basis weight of 25 to 180 g/m², more preferably 30 to 150 g/m², even more preferably 50 to 120 g/m² and most preferably 70 to 90 g/m². The basis weight can be determined according to ISO 536:2012.

Since one and preferably both of the first and the second polyethylene-containing polymer layers (20, 40) contain the mineral filler, it is not necessary that the sheet of paper (30) is modified with flame retardants in order to achieve sufficient fire resistance. In terms of economic aspects, health, safety and environmental aspects, it is even preferred that the sheet of paper (30) does not contain conventional flame retardants, such as halogen-, boron- or heavy metal-based flame retardants.

### Aluminum layer

For the first and the second aluminum layer (10, 50), sheets of aluminum or aluminum alloys can be used, which are commonly employed for producing paper-based foam facers. Either pure aluminum or an aluminum alloy, typically containing 80 wt.% or more, preferably 90 wt.% or more and more preferably 95 wt.% or more, of aluminum, are used for the first and the second aluminum layer (10, 50). Examples of suitable aluminum alloys are aluminum alloys 8111, 8011, 8079 of DIN EN 573-3. Aluminum is preferred for making the first and/or the second aluminum layer (10, 50).

For example, in the foam facer (1) of the present invention, the first and/or the second aluminum layer (10, 50) can have independently from another a basis weight of 13 to 80 g/m², preferably 15 to 60 g/m² and more preferably 16 to 40 g/m². The thickness of the first and/or the second aluminum layer (10, 50) may be 5 to 30 µm.

If the first aluminum layer (10) forms an outermost layer of the foam facer (1) of the present invention, it has preferably a basis weight of 20 g/m² or more, preferably 30 to 40 g/m².

In case a second aluminum layer (50) is present, it may be identical or different from the first aluminum layer (10). In particular, if the second aluminum layer (50) forms an outermost layer of the foam facer (1), the same basis weights are preferred as indicated above for the first aluminum layer (10). Preferably, the second aluminum layer (50) is placed between the second polyethylene-containing polymer layer (40) and one or more additional layers (70). In this case, the second aluminum layer (50) may be thinner than the first aluminum layer (10) and has preferably a basis weight of 10 to 25 g/m², preferably 13 to 20 g/m².

It is preferred that the first aluminum layer (10) is an outermost layer, so that it can also form an outermost layer in the final foam panel or foam board (100).

### Additional elements

The foam facer (1) of the present invention may further comprise additional elements, such as one, two, three or more additional layers (70). The one, two, three or more additional layers (70) may be placed on the first and/or the second aluminum layers (10, 50) opposite to the first and the second polyethylene-containing polymer layer (20, 40), respectively.

For example, an additional layer (70) may be a further polyethylene layer, a primer or a lacquer layer optionally containing a print, a colorant or a pigment (71, 72). The additional layers may also comprise a tie layer (75), e.g. as described above, for bonding one, two or more additional layers (71, 72) to the first and/or the second aluminum layer (10, 50), in particular the second aluminum layer (50).

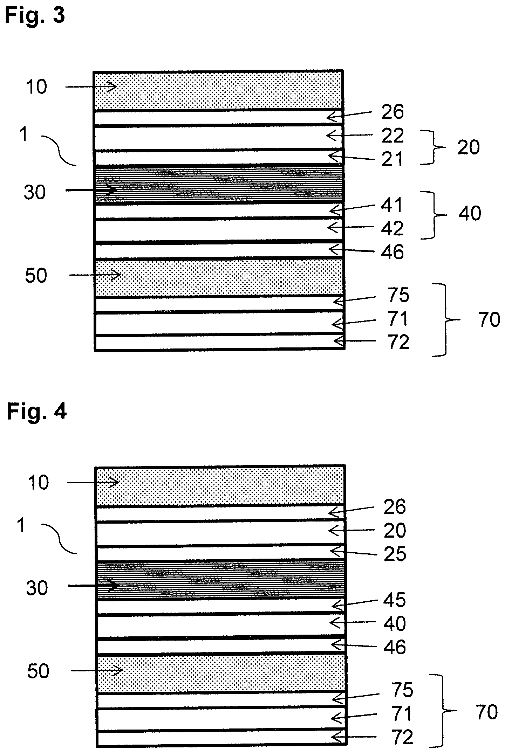

According to a preferred embodiment, the first aluminum layer (10) constitutes an outermost layer of the foam facer (1), and one, two, three or more additional layers (70) are arranged on the second aluminum layer (50), so that the second aluminum layer (50) is placed between the second polyethylene-containing polymer layer (40) and the additional layer(s) (70), as illustrated in Fig. 3 and Fig. 4.

### Process for making the foam facer

The foam facer (1) of the present invention can be produced by conventional methods using conventional process conditions. For example, glue lamination for bonding elements of the foam facer (1) by means of tie layers to each other or extrusion lamination for forming a direct contact between the layers can be used for producing the laminate. A suitable extrusion coating and lamination process is for example described in EP 2 479 028 A1.

In principle standard extruders can be used for making the foam facer (1) of the present invention. Since there are a large variety of extruders, the extrusion conditions should be adapted to actual extruder used for making the foam facer (1). This is known to the skilled person.

Therefore, the following conditions are indicated as guidance. For an industrial extruder with an extrusion speed of 200 m/min, a useful feedblock temperature may be approx. 315°C and a useful die temperature may be 310°C. In general, melt pressures of 35 to 45 bar and melt temperatures of 300°C to 330°C can be used for forming the first and second polyethylene-containing polymer layer (20, 40) or the sublayers (21, 22, 41, 42) thereof. Tie layers (25, 26, 45, 46, 75) can be extruded under similar conditions. Of course, the output has to be adapted to the desired basis weight. Foam panel or foam board

According to a further aspect, the present invention is directed at a foam panel or a form board (100). The foam panel or foam board (100) comprises
a foam facer (1) according to an embodiment of the present invention and a polymer foam (2) arranged thereon or
two foam facers (1) according to an embodiment of the present invention, the two foam facers (1) being identical or different from another and being arranged on opposite sides of a polymer foam (2). In case of one foam facer (1) according to the present invention, the foam panel or foam board (100) may, in principle, comprise a conventional foam facer as the second foam facer or a metal layer (3) instead, the metal layer (3), such as a sheet of aluminum or an aluminum alloy, being preferred.

Furthermore, it is preferred that the foam panel or foam board (100) contains two foam facers (1) of the present invention.

In the foam panel or foam board (100), it is preferred that the first aluminum layer (10) of the foam facer (1) faces away from the polymer foam (2). It more preferred that it forms an outermost layer of the foam panel or foam board (100). In this way, a reflective insulation product is obtained.

Preferably, the foam panel or foam board (100) contains a rigid polymer foam (2). The polymer foam (2) may, for example, be a polyisocyanurate (PIR) foam, a polyurethane (PUR) foam or a phenolic foam. PIR foams and PUR foams are preferable in terms of rigidity and insulation properties. The polymer foam may contain additives, generally used in the present field, including fire retardants.

As mentioned above, since the foam facer (1) of the present invention has improved fire resistance, it also enhances the fire resistance of the foam panel or foam board (100) in comparison to conventional paper-based foam facers.

Due to the enhanced fire resistance of the foam facer (1) of the present invention, the foam panel or foam board (100) preferably has a fire resistance that fulfills the requirements of Euroclass E according to EN ISO 11925-2.

Accordingly, the foam panel or foam board (100) can be used for all kinds of insulations, where (rigid) foam panels or foam boards with good fire resistance are desirable. A further aspect of the present invention thus relates to the use of the foam panel or foam board (100) for building insulations, such as flooring, flat roofing, cavity wall insulation, pitched roofing, inside wall restoration and pipe insulation.

### Process for making the foam panel or foam board

The process for making the foam panel or foam board (100) is not limited and all conventional methods can be used, provided that at least one foam facer (1) according to the present invention is used. For instance, a finger lay down foaming process or a calibration foaming process may be used for forming the polymer foam (2). PIR and PUR can, for example, be applied with 28 to 36°C onto the foam facer (1) and then be heated, for example to 50 to 55°C in case of PUR and about 70°C in case of PIR.

### Examples

### Example 1

The following laminate (Table 1) was produced by extrusion lamination in accordance with the parameters indicated in the section process for making the foam facer.

For making the first and second polyethylene-containing polymer layer (20, 40), the material FPO PE 614 from RKW was used. FPO PE 614 is a compound of LDPE and CaCO₃ having an MFI < 7g/10 min (190°C, 2.16 kg load) and a density of 1.26 g/cm³. The CaCO₃ content is 30 to 40 wt.% according to ISO 3451-1. The mean particle diameter D50 is 1.8 µm and the particle diameter D97 is 7.5 µm.

A cross-sectional view of the resulting foam facer (1) is illustrated in Fig. 3. In the foam facer (1) of Example 1, both the first and the second polyethylene-containing polymer layer (20, 40) are comprised of two sublayers (21, 22, 41, 42). They are directly bonded to the sheet of paper (30). They are bonded to the first and second aluminum layer (10, 50) by means of tie layers (26, 46).

**Table 1**

| **g/m²** | **Material** | **Function** |
|---|---|---|
| 32.4 | Aluminum alloy 8079 | First aluminum layer (10) |
| 3 | EMAA | Tie layer (26) |
| 8 | LDPE + CaCO₃ (FPO PE 614) | First polyethylene-containing polymer layer (20) with two sublayers (21, 22) |
| 3 | LDPE + CaCO₃ (FPO PE 614) | |
| 70 | Kraft paper | Sheet of paper (30) |
| 3 | LDPE + CaCO₃ (FPO PE 614) | Second polyethylene-containing polymer layer (40) with two sublayers (41, 42) |
| 8 | LDPE + CaCO₃ (FPO PE 614) | |
| 3 | EMAA | Tie layer (46) |
| 16.2 | Aluminum alloy 8079 | Second aluminum layer (50) |
| 3 | EMAA | Additional layers (70), namely a tie layer (75) of EMAA and two polyethylene layers (71, 72) |
| 11 | LDPE (MFI = 4) | |
| 5 | LDPE (80 wt.%, MFI = 4) + HDPE (20 wt.%) | |

### Example 2

The following laminate (Table 2) was produced by extrusion lamination in accordance with the parameters indicated in the section process for making the foam facer.

For making the first and second polyethylene-containing polymer layer (20, 40), 60 wt.% of LDPE (MFI = 7) were blended with 40 wt.% of a masterbatch of 73 wt.% of CaCO₃ and 27 wt.% of LDPE. Hence, the blend contained approx. 71 wt.% of LDPE and 29 wt.% of CaCO₃. The CaCO₃ had a mean particle diameter D50 of 3.9 µm and a particle diameter D98 of < 6 µm.

A cross-sectional view of the resulting foam facer (1) is illustrated in Fig. 4. In the foam facer (1) of Example 2, both the first and the second polyethylene-containing polymer layer (20, 40) are comprised of a single polyethylene layer containing the mineral filler. They are bonded to the sheet of paper (30) and the aluminum layer (10, 50), respectively, by means of EMAA tie layers (25, 26, 45, 46).

**Table 2**

| **g/m²** | **Material** | **Function** |
|---|---|---|
| 32.4 | Aluminum alloy 8079 | First aluminum layer (10) |
| 3 | EMAA | Tie layer (26) |
| 8 | LDPE (71 wt.%) + CaCO₃ (29 wt.%) | First polyethylene-containing polymer layer (20) |
| 3 | EMAA | Tie layer (25) |
| 70 | Kraft paper | Sheet of paper (30) |
| 3 | EMAA | Tie layer (45) |
| 8 | LDPE (71 wt.%) + CaCO₃ (29 wt.%) | Second polyethylene-containing polymer layer (40) |
| 3 | EMAA | Tie layer (46) |
| 16.2 | Aluminum alloy 8079 | Second aluminum layer (50) |
| 3 | EMAA | Additional layers (70), namely a tie layer (75) of EMAA and two polyethylene layers (71, 72) |
| 11 | LDPE (MFI = 4) | |
| 5 | LDPE (80 wt.%, MFI = 4) + HDPE (20 wt.%) | |

### Comparative Example 1

The following laminate (Table 3) was produced by extrusion lamination in accordance with the parameters indicated in the section process for making the foam facer.

Comparative Example 1 was produced using ordinary polyethylene layers (each 100 wt.% LDPE, MFI = 4) instead of the first and the second polyethylene-containing polymer layers (20, 40) containing the mineral filler.

**Table 3**

| **g/m²** | **Material** | **Function** |
|---|---|---|
| 16.2 | Aluminum alloy 8079 | Aluminum layer |
| 3 | EMAA | Tie layer |
| 8 | LDPE (MFI = 4) | Ordinary PE layer |
| 3 | EMAA | Tie layer |
| 70 | Kraft paper | Sheet of paper |
| 3 | EMAA | Tie layer |
| 8 | LDPE (MFI = 4) | Ordinary PE layer |
| 3 | EMAA | Tie layer |
| 16.2 | Aluminum alloy 8079 | Aluminum layer |
| 3 | EMAA | A tie layer of EMAA and two PE layers |
| 11 | LDPE (MFI = 4) | |
| 5 | LDPE (80 wt.%, MFI = 4) + HDPE (20 wt.%) | |

### Comparative Example 2

The following laminate (Table 4) was produced by extrusion lamination in accordance with the parameters indicated in the section process for making the foam facer.

Comparative Example 2 was produced using ordinary polyethylene layers (each 100 wt.% LDPE, MFI = 4) instead of the first and the second polyethylene-containing polymer layers (20, 40) containing the mineral filler.

**Table 4**

| **g/m²** | **Material** | **Function** |
|---|---|---|
| 32.4 | Aluminum alloy 8079 | Aluminum layer |
| 3 | EMAA | Tie layer |
| 8 | LDPE (MFI = 4) | Ordinary PE layer |
| 3 | EMAA | Tie layer |
| 70 | Kraft paper | Sheet of paper |
| 3 | EMAA | Tie layer |
| 8 | LDPE (MFI = 4) | Ordinary PE layer |
| 3 | EMAA | Tie layer |
| 16.2 | Aluminum alloy 8079 | Aluminum layer |
| 3 | EMAA | A tie layer of EMAA and two PE layers |
| 11 | LDPE (MFI = 4) | |
| 5 | LDPE (80 wt.%, MFI = 4) + HDPE (20 wt.%) | |

### Fire testing

A foam panel (100) was prepared by placing a rigid PIR foam (2) between two laminates (foam facers (1)) as obtained by Example 1 or Example 2, respectively. The first aluminum layer (10) forms the outermost layer in the foam panel (100). Such a foam panel is illustrated in Fig. 2b. For comparison, the same foam panels are produced with laminates according to Comparative Example 1 and Comparative Example 2, respectively. Each foam panel had a thickness of 100 mm.

Each foam panel was subjected to a fire test according to EN ISO 11925-2. This involves a small burner test, where the flame directly attacks a corner of the foam facer. In order to pass the test, flame propagation has to be smaller than 15 cm within 20 seconds. Flame propagation in machine direction (md) and cross-machine direction (cd) are measured. The results are summarized in Table 5.

**Table 5**

| **Foam facer** | **Flame propagation md /cd (in cm)** | **Delamination** | **Euroclass E** |
|---|---|---|---|
| Example 1 | 10.3 / 9.8 | Not observed | Passed |
| Example 2 | 10.3 / 9.8 | Not observed | Passed |
| Comparative Example 1 | > 15 / > 15 | Yes | Failed |
| Comparative Example 2 | > 15 / > 15 | Yes | Failed |

The foam panels (100) according to the present invention fulfilled the requirements of Euroclass E. When exposed to the flame under the test conditions, no delamination was observed when using the foam facers (1) of Example 1 and 2, respectively. Fire propagation was thus slow and the height of the flames was low (10 to 12 cm). In contrast thereto, the foam panels using foam facers according to Comparative Examples 1 and 2, respectively, delamination of the paper sheet from the polyethylene layers occurred irrespective of whether tie layers are used or not. The exposed paper started immediately burning fiercely. Fire propagation was fast and flame heights were above 15 cm.

## Claims

1. A foam facer (1), which is a laminate comprising
- a first aluminum layer (10) of aluminum or an aluminum alloy;
- a first polyethylene-containing polymer layer (20);
- a sheet of paper (30);
- a second polyethylene-containing polymer layer (40); and
- optionally, a second aluminum layer (50) of aluminum or an aluminum alloy;
the sheet of paper (30) being placed between the first and the second polyethylene-containing polymer layer (20, 40), the first polyethylene-containing polymer layer (20) being placed between the first aluminum layer (10) and the sheet of paper (30) and the second polyethylene-containing polymer layer (40) being placed between the second aluminum layer (50), if present, and the sheet of paper (30),
wherein
the first and/or the second polyethylene-containing polymer layer (20, 40) contain(s) independently from another 10 to 60 wt.% of a mineral filler, based on the total weight of the respective layer,
the mineral filler is selected from the group consisting of calcium carbonate, calcium magnesium carbonate, talc, clay, a magnesium hydroxide compound, an aluminum hydroxide compound and combinations thereof, and
the mineral filler has a mean particle diameter D50 of 0,5 µm or more and 10 µm or less as determined by laser diffraction analysis.

2. The foam facer (1) according to claim 1, wherein the mineral filler has a particle diameter D98 of 15 µm or less as determined by laser diffraction analysis.

3. The foam facer (1) according to claim 1 or 2, wherein first and/or the second polyethylene-containing polymer layer (20, 40) contain(s) independently from another 15 to 50 wt.% of the mineral filler, based on the total weight of the respective layer.

4. The foam facer (1) according to any one of claims 1 to 3, wherein the mineral filler is selected from the group consisting of calcium carbonate, calcium magnesium carbonate, talc and combinations thereof.

5. The foam facer (1) according to any one of claims 1 to 4, wherein the first and/or the second polyethylene-containing polymer layer (20, 40) contain(s) independently from another 80 to 100 wt.% of polyethylene and 20 to 0 wt.% of polypropylene, based on the total weight of the polymers in the respective layer.

6. The foam facer (1) according to any one of claims 1 to 5, wherein the first and the second polyethylene-containing polymer layer (20, 40) contain in total less than 2.0 wt.% of halides, boron and heavy metals except Zn, based on the total weight of the respective layer.

7. The foam facer (1) according to any one of claims 1 to 6, wherein the first and/or the second polyethylene-containing polymer layer (20, 40) is/are independently from another made of two, three or more polyethylene-containing sublayers (21, 22, 41, 42), wherein one, two or more of the sublayers may be free of the mineral filler provided that at least one sublayer contains the mineral filler.

8. The foam facer (1) according to any one of claims 1 to 7, wherein the first and/or the second polyethylene-containing polymer layer (20, 40) has/have independently from another a basis weight in the range of 5 to 30 g/m².

9. The foam facer (1) according to any one of claims 1 to 8, wherein the first and the second polyethylene-containing polymer layer (20, 40) are independently from another either directly bonded to the sheet of paper (30) or by means of a tie layer (25, 45).

10. The foam facer (1) according to any one of claims 1 to 9, wherein the first and the second polyethylene-containing polymer layer (20, 40) are independently from another either directly bonded to the first aluminum layer (10) and the second aluminum layer (50), respectively, or by means of a tie layer (26, 46).

11. The foam facer (1) according to any one of claims 1 to 10, wherein the sheet of paper (30) is a kraft paper having a basis weight of 25 to 180 g/m².

12. A foam panel or a foam board (100) comprising
a foam facer (1) according to any one of claims 1 to 11 and a polymer foam (2) arranged thereon or
two foam facers (1) according to any one of claims 1 to 11 being identical or different from another and being arranged on opposite sides of a polymer foam (2).

13. The foam panel or foam board (100) according to claim 12, wherein the polymer foam (2) is a polyisocyanurate (PIR) foam, a polyurethane (PUR) foam or a phenolic foam.

14. The foam panel or foam board (100) according to claim 12 or 13, wherein the foam panel or foam board (100) has a fire resistance fulfilling the requirements of Euroclass E according to EN ISO 11925-2.

15. Use of the foam panel or foam board (100) according to any one of claims 12 to 14 for building insulations.

## Patentansprüche

1. Schaumstoffverkleidung (1), die ein Laminat ist, das umfasst:
- eine erste Aluminiumschicht (10) aus Aluminium oder einer Aluminiumlegierung;
- eine erste Polyethylen-haltige Polymerschicht (20);
- einen Bogen Papier (30);
- eine zweite Polyethylen-haltige Polymerschicht (40); und
- optional eine zweite Aluminiumschicht (50) aus Aluminium oder einer Aluminiumlegierung;
wobei der Bogen Papier (30) zwischen der ersten und der zweiten Polyethylen-haltigen Polymerschicht (20, 40) angeordnet ist, die erste Polyethylen-haltige Polymerschicht (20) zwischen der ersten Aluminiumschicht (10) und dem Bogen Papier (30) angeordnet ist und die zweite Polyethylen-haltige (40) zwischen der zweiten Aluminiumschicht (50), falls vorhanden, und dem Bogen Papier (30) angeordnet ist,
wobei
bezogen auf das Gesamtgewicht der jeweiligen Schicht die erste und/oder die zweite Polyethylen-haltige Polymerschicht (20, 40) unabhängig voneinander 10 bis 60 Gew.-% mineralischen Füllstoff enthält/enthalten,
der mineralische Füllstoff aus der Gruppe, bestehend aus Calciumcarbonat, Calciummagnesiumcarbonat, Talk, Ton, einer Magnesiumhydroxidverbindung, einer Aluminiumhydroxidverbindung und Kombinationen davon, ausgewählt ist, und
der mineralische Füllstoff einen mittleren Partikeldurchmesser D50, bestimmt durch Laserbeugungsanalyse, von 0,5 µm oder mehr und 10 µm oder weniger aufweist.

2. Schaumstoffverkleidung (1) gemäß Anspruch 1, wobei der mineralische Füllstoff einen Partikeldurchmesser D98, bestimmt durch Laserbeugungsanalyse, von 15 µm oder weniger aufweist.

3. Schaumstoffverkleidung (1) gemäß Anspruch 1 oder 2, wobei bezogen auf das Gesamtgewicht der jeweiligen Schicht die erste und/oder die zweite Polyethylen-haltige Polymerschicht (20, 40) unabhängig voneinander 15 bis 50 Gew.-% mineralischen Füllstoff enthält/enthalten.

4. Schaumstoffverkleidung (1) gemäß einem der Ansprüche 1 bis 3, wobei der mineralische Füllstoff aus der Gruppe, bestehend aus Calciumcarbonat, Calciummagnesiumcarbonat, Talk und Kombinationen davon, ausgewählt ist.

5. Schaumstoffverkleidung (1) gemäß einem der Ansprüche 1 bis 4, wobei bezogen auf das Gesamtgewicht der Polymere in der jeweiligen Schicht die erste und/oder die zweite Polyethylen-haltige Polymerschicht (20, 40) unabhängig voneinander 80 bis 100 Gew.-% Polyethylen und 20 bis 0 Gew.-% Polypropylen enthält/enthalten.

6. Schaumstoffverkleidung (1) gemäß einem der Ansprüche 1 bis 5, wobei bezogen auf das Gesamtgewicht der jeweiligen Schicht die erste und die zweite Polyethylen-haltige Polymerschicht (20, 40) insgesamt weniger als 2,0 Gew.-% Halogene, Bor und Schwermetalle mit Ausnahme von Zn enthalten.

7. Schaumstoffverkleidung (1) gemäß einem der Ansprüche 1 bis 6, wobei die erste und/oder die zweite Polyethylen-haltige Polymerschicht (20, 40) unabhängig voneinander aus zwei, drei oder mehr Polyethylen-haltigen Unterschichten (21, 22, 41, 42) ist/sind, wobei eine, zwei oder mehr der Unterschichten frei von dem mineralischen Füllstoff sein können, vorausgesetzt, dass mindestens eine Unterschicht den mineralischen Füllstoff enthält.

8. Schaumstoffverkleidung (1) gemäß einem der Ansprüche 1 bis 7, wobei die erste und/oder die zweite Polyethylen-haltige Polymerschicht (20, 40) unabhängig voneinander ein Flächengewicht im Bereich von 5 bis 30 g/m² aufweist/aufweisen.

9. Schaumstoffverkleidung (1) gemäß einem der Ansprüche 1 bis 8, wobei die erste und die zweite Polyethylen-haltige Polymerschicht (20, 40) unabhängig voneinander entweder direkt oder mittels einer Haftvermittlerschicht (25, 45) mit dem Bogen Papier (30) verbunden sind.

10. Schaumstoffverkleidung (1) gemäß einem der Ansprüche 1 bis 9, wobei die erste und die zweite Polyethylen-haltige Polymerschicht (20, 40) unabhängig voneinander entweder direkt oder mittels einer Haftvermittlerschicht (26, 46) mit der ersten Aluminiumschicht (10) bzw. mit der zweiten Aluminiumschicht (50) verbunden sind.

11. Schaumstoffverkleidung (1) gemäß einem der Ansprüche 1 bis 10, wobei der Bogen Papier (30) ein Kraftpapier mit einem Flächengewicht von 25 bis 180 g/m² ist.

12. Schaumstoffpaneel oder Schaumstoffplatte (100), umfassend
eine Schaumstoffverkleidung (1) gemäß einem der Ansprüche 1 bis 11 und einen darauf angeordneten Polymerschaum (2) oder
zwei Schaumstoffverkleidungen (1) gemäß einem der Ansprüche 1 bis 11, die identisch oder voneinander verschieden sind und auf gegenüberliegenden Seiten eines Polymerschaums (2) angeordnet sind.

13. Schaumstoffpaneel oder Schaumstoffplatte (100) gemäß Anspruch 12, wobei der Polymerschaum (2) ein Polyisocyanurat (PIR)-Schaum, ein Polyurethan (PUR)-Schaum oder ein Phenolschaum ist.

14. Schaumstoffpaneel oder Schaumstoffplatte (100) gemäß Anspruch 12 oder 13, wobei das Schaumstoffpaneel oder die Schaumstoffplatte (100) eine Feuerfestigkeit aufweist, die die Anforderungen der Euroclass E gemäß EN ISO 11925-2 erfüllt.

15. Verwendung des Schaumstoffpaneels oder der Schaumstoffplatte (100) gemäß einem der Ansprüche 12 bis 14 für Gebäudeisolierungen.

## Revendications

1. Parement de mousse (1), qui est un stratifié comprenant
- une première couche d'aluminium (10) en aluminium ou en un alliage d'aluminium ;
- une première couche de polymère contenant un polyéthylène (20) ;
- une feuille de papier (30) ;
- une seconde couche de polymère contenant un polyéthylène (40) ; et
- de manière facultative, une seconde couche d'aluminium (50) en aluminium ou en un alliage d'aluminium ;
la feuille de papier (30) étant placée entre la première et la seconde couche de polymère contenant un polyéthylène (20, 40), la première couche de polymère contenant un polyéthylène (20) étant placée entre la première couche d'aluminium (10) et la feuille de papier (30) et la seconde couche de polymère contenant un polyéthylène (40) étant placée entre la seconde couche d'aluminium (50), si présente, et la feuille de papier (30),
dans lequel
la première et/ou la seconde couche de polymère contenant un polyéthylène (20, 40) contien(nen)t indépendamment l'une de l'autre 10 à 60% en poids d'un agent de remplissage minéral, sur la base du poids total de la couche respective,
l'agent de remplissage minéral est sélectionné dans le groupe constitué par le carbonate de calcium, le carbonate de calcium et de magnésium, le talc, l'argile, un composé d'hydroxyde de magnésium, un composé d'hydroxyde d'aluminium et les combinaisons de ceux-ci, et
l'agent de remplissage minéral a un diamètre de particule moyen D50 de 0,5 µm ou plus et de 10 µm ou moins tel que déterminé par analyse par diffraction laser.

2. Parement de mousse (1) selon la revendication 1, dans lequel l'agent de remplissage minéral a un diamètre de particule D98 de 15 µm ou moins tel que déterminé par analyse par diffraction laser.

3. Parement de mousse (1) selon la revendication 1 ou 2, dans lequel la première et/ou la seconde couche de polymère contenant un polyéthylène (20, 40) contien(nen)t indépendamment l'une de l'autre de 15 à 50 % en poids de l'agent de remplissage minéral, sur la base du poids total de la couche respective.

4. Parement de mousse (1) selon l'une quelconque des revendications 1 à 3, dans lequel l'agent de remplissage minéral est sélectionné dans le groupe constitué par le carbonate de calcium, le carbonate de calcium et de magnésium, le talc et les combinaisons de ceux-ci.

5. Parement de mousse (1) selon l'une quelconque des revendications 1 à 4, dans lequel la première et/ou la seconde couche de polymère contenant un polyéthylène (20,40) contien(nen)t indépendamment l'une de l'autre 80 à 100% en poids d'un polyéthylène et 20 à 0 % en poids d'un polypropylène, sur la base du poids total des polymères dans la couche respective.

6. Parement de mousse (1) selon l'une quelconque des revendications 1 à 5, dans lequel la première et la seconde couche de polymère contenant un polyéthylène (20, 40) contiennent au total moins de 2,0% en poids d'halogénures, de bore et de métaux lourds sauf Zn, sur la base du poids total de la couche respective.

7. Parement de mousse (1) selon l'une quelconque des revendications 1 à 6, dans lequel la première et/ou la seconde couche de polymère contenant un polyéthylène (20,40) est/sont indépendamment l'une de l'autre faite(s) de deux, trois ou plus de trois sous-couches contenant un polyéthylène (21, 22, 41, 42), dans lequel une, deux ou plus de deux des sous-couches peu(ven)t être exempte(s) d'agent de remplissage minéral à condition qu'au moins une sous-couche contienne l'agent de remplissage minéral.

8. Parement de mousse (1) selon l'une quelconque des revendications 1 à 7, dans lequel la première et/ou la seconde couche de polymère contenant un polyéthylène (20,40) a/ont indépendamment l'une de l'autre un grammage dans la plage de 5 à 30 g/m².

9. Parement de mousse (1) selon l'une quelconque des revendications 1 à 8, dans lequel la première et la seconde couche de polymère contenant un polyéthylène (20, 40) sont indépendamment l'une de l'autre directement liées à la feuille de papier (30) ou au moyen d'une couche de liaison (25, 45).

10. Parement de mousse (1) selon l'une quelconque des revendications 1 à 9, dans lequel la première et la seconde couche de polymère contenant un polyéthylène (20, 40) sont indépendamment l'une de l'autre liées soit directement respectivement à la première couche d'aluminium (10) et à la seconde couche d'aluminium (50), soit au moyen d'une couche de liaison (26, 46).

11. Parement de mousse (1) selon l'une quelconque des revendications 1 à 10, dans lequel la feuille de papier (30) est un papier kraft ayant un grammage de 25 à 180 g/m².

12. Panneau de mousse ou plaque de mousse (100) comprenant
un parement de mousse (1) selon l'une quelconque des revendications 1 à 11 et une mousse de polymère (2) agencée dessus ou
deux parements de mousse (1) selon l'une quelconque des revendications 1 à 11 identiques ou différents l'un de l'autre et agencés sur des côtés opposés d'une mousse de polymère (2).

13. Panneau de mousse ou plaque de mousse (100) selon la revendication 12, dans lequel la mousse de polymère (2) est une mousse de polyisocyanurate (PIR), une mousse de polyuréthane (PUR) ou une mousse phénolique.

14. Panneau de mousse ou plaque de mousse (100) selon la revendication 12 ou 13, dans lequel le panneau de mousse ou la plaque de mousse (100) ont une résistance au feu satisfaisant aux exigences de l'Euroclasse E selon EN ISO 11925-2.

15. Utilisation du panneau de mousse ou de la plaque de mousse (100) selon l'une quelconque des revendications 12 à 14 pour les isolations des bâtiments.
